# EUROPEAN PATENT SPECIFICATION

(11) **EP 0 517 236 B1**
(45) Date of publication and mention of the grant of the patent: **21.08.1996**
(21) Application number: 92109530.3
(22) Date of filing: 05.06.1992
(51) Int. Cl.: C02F 3/06, C02F 1/28

(54) **Plant for treating wastewater polluted by surfactants**
Anlage zur Behandlung von mit oberflächenaktiven Substanzen verschmutzten Abwässern
Installation pour le traitement d'eau usée polluée par agents tensioactifs

(30) Priority: 07.06.1991 IT PD910107
(43) Date of publication of application: 09.12.1992
(73) Proprietor: S.I.D.A. SOCIETA' ITALIANA DEPURAZIONE ACQUE S.p.A., I-35030 Sarmeola di Rubano (Padova) (IT)
(72) Inventor: Caporello, Ivano, I-35100 Padova (IT); Tiarca, Maurizio, I-35100 Padova (IT)
(74) Representative: Modiano, Guido, Dr.-Ing.

(56) References cited:
- DE-A- 2 801 030
- DE-A- 3 631 817
- FR-A- 2 557 558
- GB-A- 2 006 181
- WORLD PATENTS INDEX Section Ch, Week 8030, Derwent Publications Ltd., London, GB; Class D, AN 80-52829C

## Description

The present invention relates to a plant or installation for treating wastewater polluted by surfactants.

Surfactants or surface-active substances or agents are synthetic or natural organic substances which are present in many types of civil and industrial effluents.

These substances are of the anionic, cationic and nonionic types and are not easy to eliminate either biologically or with chemical-physical methods.

Surfactants often occur to be in concentrations which exceed the limits allowed by the currently applicable statutory provisions even after a purification treatment, since the treatment plant is not able to reduce them to the required level or does not reduce them at all.

A first situation occurs downstream of conventional biological treatments, if these are not sized with the aim of complete elimination of detergents.

Said detergents are thus destroyed only partially, and the final result is that the treated water has a rather low COD with a residual content of organic substance which is within the allowed limits but a content of surfactants which does not comply with the statutory provisions.

The COD parameter is in fact inaccurate for measuring surfactants, for which statutory provisions allow a residual value of 2 mg/l, which are equivalent to no more than 8 mg/l of COD.

The second situation occurs downstream of chemical-physical purification facilities studied particularly for eliminating inorganic pollutants such as for example chrome, zinc, copper, phosphates, iron, etc.

A typical case occurs in industries which prepare metal plates for painting, such as for example industries for the manufacture of household appliances or of motor vehicle bodies.

In these industries, the metal plates undergo a series of treatments to prepare them for painting; the first treatment is constituted by a degreasing operation which uses surfactants.

After the degreasing bath, the plates are washed, and the washing water, which contains detergents, is sent to the treatment plant together with the water produced during the subsequent steps of pickling, phosphating, chromium plating, etc.

The most evident pollution produced during these treatments is inorganic, so that these industries are normally equipped with chemical-physical treatment plants which are more than adequate to eliminate inorganic pollutants but leave practically unchanged the surfactants which arrive from the washing operation following degreasing.

These surfactants are also increased by those of the actual bath, which is periodically renewed, collected, stored separately and metered in small daily amounts into the rest of the waste.

The COD of this treated water is very low, since it is due to the content of residual surfactants (in practice one obtains water with 8-10 mg/l of surfactants which have no more than 40 mg/l of COD).

Although the currently applicable statutory provisions on the subject prescribe the use of biodegradable surfactants, this water is considered biologically untreatable indeed due to the very low COD, which can be compared to the COD of biologically conditioned water; in other words, it is thought that water with this COD does not allow to grow biomass which can accumulate in the purification plant, and no biological plant can work without an accumulation of biomass.

In the current state of the art, this problem is solved by working in two ways:
1) by chemically oxidizing the surfactants with energetic oxidizers, such as chloride dioxide, ozone, catalyzed hydrogen peroxide, permanganate;
2) by absorbing the surfactant on granular or powdered activated carbon.

However, both solutions are very expensive both from the point of view of the costs of the plant and from the point of view of operating costs.

Known from SU-701957 is an installation for deep cleaning of aqueous effluents and sewage, to remove organic impurities, suspended matter and surface-active substances, comprising a reservoir, filled with an absorbing charge with microorganisms for biological regeneration, a water-distribution system, aerating device, and pipelines for supplying the initial liquid, for circulating it, and bringing in the wash water, wherein the absorbing charge is made of two layers of a sorbent material.

The aim of the present invention is to provide a plant which is capable of biologically treating wastewater polluted by surfactants in an economical manner.

A consequent primary object is to provide a plant which can retain and accumulate the biomass required for biological treatment.

Another important object is to provide a plant which has a low operating cost.

Not least object is to provide a plant which can be marketed at a competitive price.

This aim, these objects and others which will become apparent hereinafter are achieved by a plant for treating wastewater polluted by surfactants according to claim 1.

Further characteristics and advantages of the invention will become apparent from the detailed description of an embodiment thereof, illustrated only by way of non-limitative example in the accompanying drawing, wherein:
figure 1 is a diagram of the plant according to the invention;
figure 2 is a diagram of a further embodiment of the plant according to the invention.

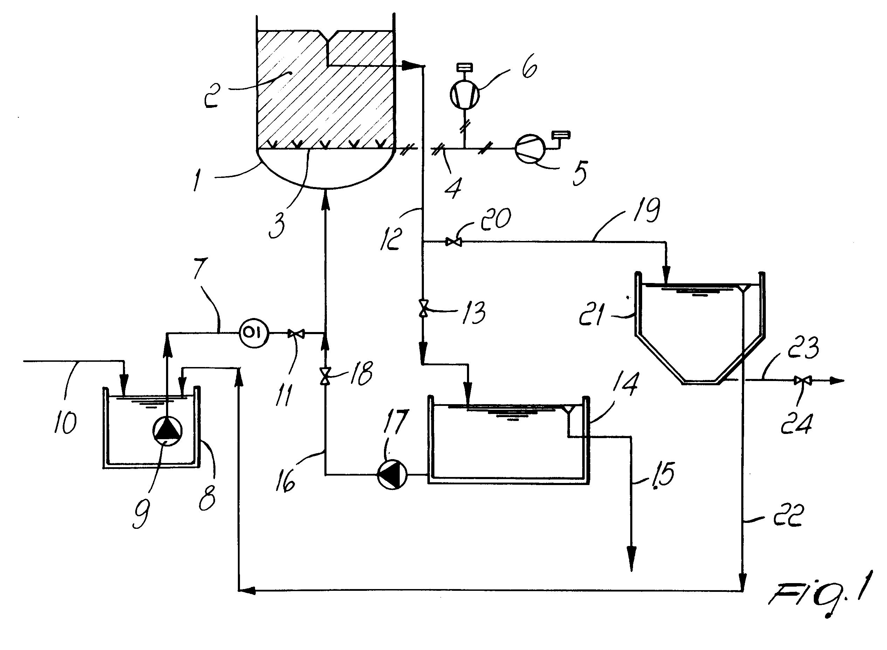

With reference to the above figure 1, the plant for treating wastewater polluted by surfactants comprises a tank 1 which is filled with a supporting bed 2 made of inert granular material which can be constituted by fine grains of quartz or anthracite, pozzuolana, limestone, basalt.

The grain size of the supporting material is appropriately divided according to the depth.

Said bed 2 rests on a perforated bottom 3 which is provided with nozzles, not shown, which have, in their upper part, i.e. on the side of the supporting material, draining heads provided with openings which are small enough to prevent the escape of said supporting material.

The nozzles are connected to the lower part of the perforated bottom, into which an air feed pipe 4 enters; said pipe is divided into two branches, each with its own blower, respectively 5 and 6.

The first blower 5 is suitable to convey the air required for oxidation, whereas the second blower 6, which is more powerful, is used for the periodic violent mixing of the supporting bed 2 in order to prevent possible occlusions due to biological growth in the interstices of the material.

A pipe 7 feeds the water to be treated into the tank 1 from the bottom and draws it from a tank 8 by means of a pump 9.

The tank 8 is supplied by means of a pipe 10.

A cutoff valve 11 is also present in said pipe 7.

At the top of the bed 2, a pipe 12, with a related cutoff valve 13, draws the treated wastewater and sends it to a tank 14, close to the top of which a discharge pipe 15 is connected.

In this particular plant, the air stream is in equicurrent with the flow of wastewater to be treated, but in other plants the stream can also be provided in countercurrent.

A counterwashing pipe 16, with related pump 17 and cutoff valve 18, connects said tank 14 to the feed pipe 7 downstream of the cutoff valve 11.

Upstream of said cutoff valve 13, a pipe 19 with related cutoff valve 20 is connected to said pipe 12 and is suitable to discharge the washing water into a settling tank 21 whose top is connected, by means of a pipe 22, to the tank 8 of the wastewater to be treated.

The settling tank 21 is connected, at the bottom, to a sludge discharge pipe 23 with related cutoff valve 24.

As regards the operation of the plant, the blower 5, by means of the pipe 4, injects air into the base and said air is distributed in the bed 2 through the nozzles.

The heads of the nozzles are shaped for directing the air laterally, so as to strike the entire bottom of the tank 1, which is thus exploited completely, avoiding preferential paths.

The wastewater to be treated is sent together with the air through the pipe 7 and a growth of biomass inside the bed 2 is caused.

Growth on an inert support allows to retain in the bed an amount of biomass useful for the purification which is not affected by the low COD and is not washed away by the liquid flow and by the dispersion activity of the detergents which are present.

Periodically, the blower 6 violently injects air into the bed 2, so as to prevent occlusions due to biological growth in the interstices in the supporting material.

When the biomass inside the bed 2 has reached excessive levels and needs to be expelled, the shock produced periodically by the blower 6 is combined with a true counterwash with clean water which is suitable to expel the excess biomass.

The counterwashing water is sent through the pipe 16, by cutting off the tube 7.

The effluent of the counterwash is then collected by means of the pipe 19, allowed to settle in the settling tank 21 and recollected upstream of the plant by means of the pipe 22.

The sludge which forms on the bottom of the settling tank 21 is instead sent to an appropriate disposal system by means of the pipe 23.

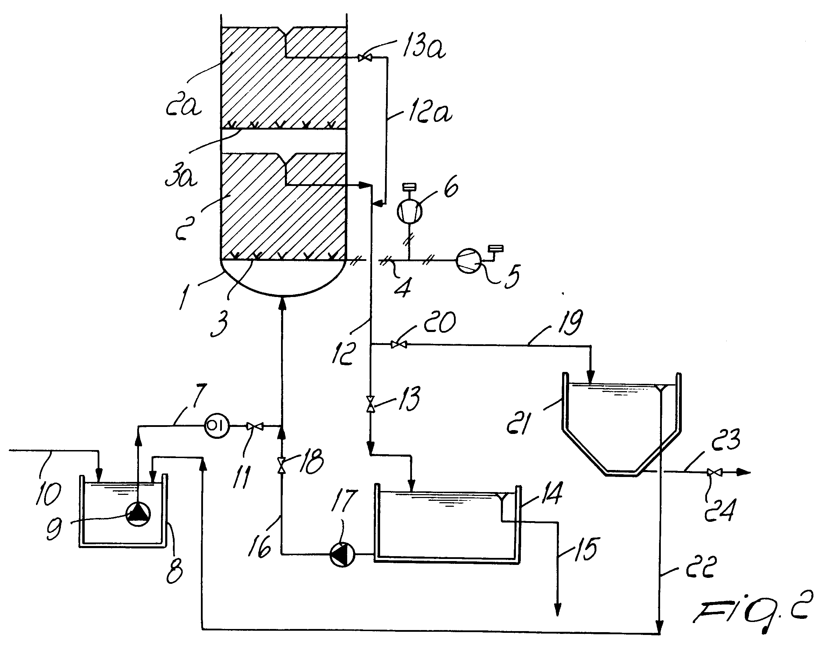

Reference is now made to figure 2 showing a further embodiment of the plant of figure 1.

The elements in figure 2 are the same as in the plant of figure 1 but for a constructive difference in the tank 1.

The tank according to said further embodiment is provided with a second perforated bottom 3a, positioned above the bed 2, and also having nozzles and means for water and air distribution which are not shown in the drawing.

Above the perforated bottom 3a a second bed 2a is provided comprising adsorbent material, i.e. activated carbon or the like. The water and air going out from the first bed 2 go through such second bed 2a.

From the top of the bed 2a a pipe 12a draws the treated wastewater and sends it through a cutoff valve 13a in the pipe 12 and further to the tank 14.

The plant according to the second embodiment is especially effective when wastewater polluted with surfactants with low degree of degradability are treated or when the concentration of polluting agents is very high.

The second bed 2a of adsorbent material further adsorbs the residual surfactants up to the elimination thereof from the wastewater.

At the same time, since the second bed 2a is also crossed by water and air, a biological activity appears which helps to the biological destruction of the surfactants.

The biological activity is promoted by the fact that the bio-resistant agents are kept for a longer time in contact with the biomass which operates at the surface of the adsorbent particles.

The second bed has also the further function to stop the escapes provoked by overloads.

In practice it has been observed that the above described treatment plant has achieved the intended aim and objects of the present invention, since it is able to biologically treat wastewater with low COD polluted by surfactants, by means of a supported-biomass reactor.

The plant has a low cost and is particularly economical as regards operating costs as well.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Plant for treating wastewater polluted by surfactants, comprising a tank (1) which contains at least one supporting bed (2) made of inert granular material to which the necessary biomass clings, said inert material being constituted by fine grains of a material selected from the group consisting in quartz, anthracite, pozzuolana, limestone and basalt and being supported on a perforated bottom (3), said supporting bed (2) being connected to means (4,5,6) for blowing air into it, said tank (1) being connected to means for causing wastewater to be treated to flow in equicurrent or in countercurrent in said supporting bed (2) and to means for counterwashing said supporting bed (2) with water in order to expel excess biomass.

2. Plant according to claim 1, characterized in that it comprises means for periodically injecting air with a high flow-rate so as to provide a violent mixing of said supporting bed (2).

3. Plant according to one or more of the preceding claims, characterized in that said tank (1) is filled with said supporting bed (2).

4. Plant according to one or more of the preceding claims, characterized in that said means for blowing air into said supporting bed (2) are constituted by a pipe (4) with a related blower (5), said pipe (4) ending in the base of said tank (1) which is connected to said supporting bed (2) by means of nozzles arranged on the supporting perforated bottom (3).

5. Plant according to one or more of the preceding claims, characterized in that said means for making wastewater to be treated to flow in equicurrent or in countercurrent are constituted by liquid feed and discharge pipes (7) with at least one related circulation pump (9).

6. Plant according to one or more of the preceding claims, characterized in that said means for periodically injecting a large flow-rate of air are constituted by a feed pipe (4), with a related blower (6), which is connected to said nozzles.

7. Plant according to one or more of the preceding claims, characterized in that said means for counterwashing said supporting bed (2) are constituted by a pipe (16) with at least one related circulation pump (17) and by a discharge pipe (19) which ends in a settling tank (21).

8. Plant according to one or more of the preceding claims, characterized in that said counterwashing water is drawn from an accumulation tank (14) in which the tube (12) for discharging the liquid after treatment ends.

9. Plant according to one or more of the preceding claims, characterized in that said washing water settling tank (21) is connected by means of a recirculation pipe (22) to a tank (8) for the accumulation of the wastewater to be treated, said accumulation tank (14) being connected to said tank (8) by means of said feed pipe (7).

10. Plant according to one or more of the preceding claims, characterized in that said tank comprises a second bed (2a), said second bed (2a) being made of adsorbent material and being supported on a second perforated bottom (3a) positioned above said supporting bed (2) of inert material.

11. Method for treating wastewater polluted by surfactants in a plant according to one or more of the preceding claims, comprising the steps of causing wastewater to be treated to flow in said supporting bed (2) together with air thereby a growth of biomass inside the supporting bed (2) is caused and wastewater is purified; periodically injecting air into the bad so as to provide a violent mixing of said bed (2) thereby preventing occlusions due to biological growth in interstices of said inert material; and simultaneously injecting air so as to provide mixing of said supporting bed and counterwashing with clean water said supporting bed (2) to expel the biomass inside the supporting bed (2), when said biomass has reached excessive levels.

## Patentansprüche

1. Anlage zum Behandeln von mit oberflächenaktiven Substanzen verschmutzten Abwässern, mit den Merkmalen:
- ein Tank (1) weist zumindest ein Trägerbett (2) auf, das aus einem inerten körnigen Material besteht, an dem die erforderliche Biomasse haftet,
- das inerte Material wird durch Feinkorn eines Materials gebildet, das aus der Stoffgruppe Quarz, Anthrazit, Pozzalan-Erde, Kalkstein und Basalt ausgewählt ist, und wird von einem perforierten Tragboden (3) getragen,
- das Trägerbett (2) steht mit Mitteln (4; 5; 6) zum Einblasen von Luft in Verbindung,
- der Tank (1) steht mit Mitteln in Verbindung, durch die das zu behandelnde Abwasser im Gleichstrom oder im Gegenstrom durch das Trägerbett (2) hindurchleitbar ist, und steht mit Mitteln in Verbindung, durch die das Trägerbett (2) mit Wasser spülbar ist und überschüssige Biomasse abführbar ist.

2. Anlage nach Anspruch 1,
dadurch **gekennzeichnet,**
daß Mittel vorhanden sind, mit denen periodisch Luft in einem größeren Mengenstrom in das Trägerbett (2) einblasbar ist und so eine starke Durchmischung des Trägerbettes (2) erreichbar ist.

3. Anlage nach Anspruch 1 und/oder 2,
dadurch **gekennzeichnet,**
daß der Tank (1) mit dem Trägerbett (2) befüllt ist.

4. Anlage nach einem oder mehreren der vorangehenden Ansprüche,
dadurch **gekennzeichnet,**
daß die Mittel zum Einblasen von Luft in das Trägerbett (2) durch eine Leitung (4) mit einem Gebläse (5) gebildet werden, wobei die Leitung (4) im unteren Bereich des Tanks (1) mündet, der mit dem Trägerbett (2) über Düsen in Verbindung steht, die an dem perforierten Tragboden (3) angeordnet sind.

5. Anlage nach einem oder mehreren der vorangehenden Ansprüche,
dadurch **gekennzeichnet,**
daß die Mittel, durch die das zu behandelnde Abwasser im Gleichstrom oder im Gegenstrom durch das Trägerbett (2) hindurchleitbar ist, durch Zufluß- und Abfluß-Rohrleitungen (7) und durch wenigstens eine Umwälzpumpe (9) gebildet werden.

6. Anlage nach einem oder mehreren der vorangehenden Ansprüche,
dadurch **gekennzeichnet,**
daß die Mittel zum periodischen Einblasen eines großen Mengenstromes von Luft durch ein Zuleitungsrohr (4) und ein Gebläse (6) gebildet werden, die mit den Düsen in Verbindung stehen.

7. Anlage nach einem oder mehreren der vorangehenden Ansprüche,
dadurch **gekennzeichnet,**
daß die Mittel zum Spülen des Trägerbettes (2) durch eine Rohrleitung (16) mit wenigstens einer Umwälzpumpe (17) und durch eine Abfluß-Rohrleitung (19) gebildet werden, wobei die Abfluß-Rohrleitung (19) in einen Absetztank (21) mündet.

8. Anlage nach einem oder mehreren der vorangehenden Ansprüche,
dadurch **gekennzeichnet,**
daß das Spülwasser aus einem Sammeltank (14) abgezogen wird, in den die Rohrleitung (12) mündet, mittels der die Flüssigkeit nach der Behandlung abgeführt wird.

9. Anlage nach einem oder mehreren der vorangehenden Ansprüche,
dadurch **gekennzeichnet,**
daß der Absetztank (21) über eine Rückführleitung (22) mit einem Tank (8) zum Sammeln des zu behandelnden Abwassers in Verbindung steht und daß der Sammeltank (14) mit dem Tank (8) über die Zufluß- und Abfluß-Rohrleitung (7) in Verbindung steht.

10. Anlage nach einem oder mehreren der vorangehenden Ansprüche,
dadurch **gekennzeichnet,**
daß der Tank (1) ein zweites Trägerbett (2a) aufweist, das durch adsorbierende Materialien gebildet wird und das durch einen zweiten perforierten Tragboden (3a) getragen wird, der oberhalb des Trägerbettes (2) aus inertem Material angeordnet ist.

11. Verfahren zum Behandeln von mit oberflächenaktiven Substanzen verschmutzten Abwässern in einer Anlage gemäß einem oder mehreren der vorangehenden Ansprüche mit den Verfahrensschritten:
- das zu behandelnde Abwasser wird dem Trägerbett (2) zusammen mit Luft zugeleitet, wodurch ein Anwachsen einer Biomasse innerhalb des Trägerbettes (2) veranlaßt wird und das Abwasser gereinigt wird,
- periodisch wird Luft in das Trägerbett (2) eingeblasen, um eine heftige Durchmischung des Trägerbettes (2) zu erreichen und um dadurch das Verstopfen der Zwischenräume in dem inerten Material beim Anwachsen der Biomasse zu verhindern,
- Gleichzeitig wird Luft eingeblasen, um das Trägerbett (2) zu durchmischen, und wird das Trägerbett (2) mit reinem Wasser gespült, um überflüssige Biomasse im inneren des Trägerbettes (2) auszutreiben, wenn die Biomasse im Übermaß entstanden ist.

## Revendications

1. Installation pour le traitement d'eaux usées polluées par des agents tensio-actifs, comprenant un réservoir (1) qui contient au moins un lit de support (2) réalisé en une matière granulaire inerte sur laquelle la biomasse nécessaire s'accroche, ladite matière inerte étant constituée par des grains fins d'une matière choisie à partir du groupe comprenant le quartz, l'anthracite, la pouzzolane, le calcaire et le basalte et étant supportée sur un fond perforé (3), ledit lit de support (2) étant relié à des moyens (4,5,6) pour souffler de l'air dans celui-ci, ledit réservoir (1) étant relié à des moyens pour entraîner les eaux usées à traiter à s'écouler dans le sens du courant ou à contre-courant dans ledit lit de support (2), et à des moyens pour laver ledit lit de support (2) avec de l'eau pour expulser l'excès de biomasse.

2. Installation selon la revendication 1,
caractérisée en ce qu'elle comprend des moyens pour injecter de l'air, périodiquement, à un débit élevé afin de fournir un mélange violent dudit lit de support (2).

3. Installation selon l'une ou plusieurs des revendications précédentes,
caractérisée en ce que ledit réservoir (1) est rempli dudit lit de support (2).

4. Installation selon l'une ou plusieurs des revendications précédentes,
caractérisée en ce que lesdits moyens pour souffler de l'air dans ledit lit de support (2) sont constitués par un tuyau (4) avec un ventilateur associé (5), ledit tuyau (4) se terminant dans la base dudit réservoir (1) qui est relié audit lit de support (2), par l'intermédiaire de buses agencées sur le fond perforé de support (3).

5. Installation selon l'une ou plusieurs des revendications précédentes,
caractérisée en ce que lesdits moyens pour entraîner les eaux usées à traiter à s'écouler dans le sens du courant ou à contre-courant sont constitués par des tuyaux d'alimentation et d'évacuation de liquide (7) avec au moins une pompe de circulation associée (9).

6. Installation selon l'une ou plusieurs des revendications précédentes,
caractérisée en ce que lesdits moyens pour injecter périodiquement un grand débit d'air sont constitués par un tuyau d'alimentation (4), avec un ventilateur associé (6), qui est relié auxdites buses.

7. Installation selon l'une ou plusieurs des revendications précédentes,
caractérisée en ce que lesdits moyens pour laver ledit lit de support (2) sont constitués par un tuyau (16) avec au moins une pompe de circulation associée (17) et par un tuyau d'évacuation (19) qui se termine dans un réservoir de décantation (21).

8. Installation selon l'une ou plusieurs des revendications précédentes,
caractérisée en ce que ladite eau de lavage est aspirée d'un réservoir d'accumulation (14) dans lequel débouche le tube (12) pour évacuer le liquide après traitement.

9. Installation selon l'une ou plusieurs des revendications précédentes,
caractérisée en ce que ledit réservoir de décantation d'eau de lavage (21) est relié, par l'intermédiaire d'un tuyau de recirculation (22), à un réservoir (8) pour l'accumulation des eaux usées à traiter, ledit réservoir d'accumulation (14) étant relié audit réservoir (8) par l'intermédiaire dudit tuyau d'alimentation (7).

10. Installation selon l'une ou plusieurs des revendications précédentes,
caractérisée en ce que ledit réservoir comprend un second lit (2a), ledit second lit (2a) étant réalisé en une matière adsorbante et étant supporté sur un second fond perforé (3a) positionné au-dessus dudit lit de support (2) de matière inerte.

11. Procédé pour traiter des eaux usées polluées par des agents tensio-actifs dans une installation selon l'une ou plusieurs des revendications précédentes, comprenant les étapes d'entraîner les eaux usées à traiter à s'écouler dans ledit lit de support (2) avec de l'air grâce à quoi un développement de biomasse à l'intérieur du lit de support (2) est entraîné et les eaux usées sont purifiées ; d'injecter périodiquement de l'air dans le lit de façon à fournir un mélange violent dudit lit (2) en évitant ainsi des occlusions dues à un développement biologique dans des interstices de ladite matière inerte ; et d'injecter simultanément de l'air de façon à fournir un mélange dudit lit de support et laver avec de l'eau propre ledit lit de support (2) pour expulser la biomasse à l'intérieur dudit lit de support (2), quand ladite biomasse a atteint des quantités excessives.
